Europäisches Patentamt

European Patent Office

Office européen des brevets

(11) Veröffentlichungsnummer: **0 422 600 A1**

(12) **EUROPÄISCHE PATENTANMELDUNG**

(21) Anmeldenummer: 90119382.1

(22) Anmeldetag: 10.10.90

(51) Int. Cl.⁵: **B65G 57/02**

(30) Priorität: 12.10.89 DE 3934030

(43) Veröffentlichungstag der Anmeldung:
17.04.91 Patentblatt 91/16

(84) Benannte Vertragsstaaten:
AT CH DE IT LI

(71) Anmelder: Gesellschaft für Forschung und

Entwicklung wirtschaftlicher
Produktionssysteme mbH -GFE-
Lindemannsheide 60
W-4902 Bad Salzuflen 3(DE)

(72) Erfinder: **Weniger, Heinz**
Splittenbrede 34a
W-4800 Bielefeld 1(DE)

(54) **Fördervorrichtung für flächige Werkstücke.**

(57) Fördervorrichtung für flächige Werkstücke, bei welcher ein fahrbarer sowie heb- und senkbarer Rechen (1) vorgesehen ist, auf dem in Verbindung mit Rechner (2) Rollenförderer (3) Anschlag (4), Drehförderer (5) und Winkelförderer (6) sowohl ganze Stapelbilder (7) aus einer, als auch Teilstapelbilder (8) aus mehreren Produktionschargen (9), ungeachtet der größen- bzw. mengenmäßigen Anteile der Werkstücke (10) bei Nutzung auch meherer Rechen (1) für ein Stapelbild (7), gebildet werden, und daß für das Aufstapeln der Stapelbilder (7) und der aus Teilstapelbildern (8) entstandenen Stapelbilder (7) auf die Hubwerke (11) alle vorhandenen Rechen (1) mit ihren Abstreifern (22) beliebig anzuwenden vorgesehen sind.

Figur 1

EP 0 422 600 A1

# FÖRDERVORRICHTUNG FÜR FLÄCHIGE WERKSTÜCKE

Die Erfindung betrifft eine Vorrichtung für die Zusammenstellung von Werkstücken zu Stapelbildern aus einer oder mehreren Produktionschargen und für das palettenlose Fördern der Stapel bis zu einen Palettierförderer für das palettieren der Stapel vor ihrer Umreifung.

Eine ähnliche Vorrichtung zeigt die DE 3031648 A1. Dort werden für die Zusammenstellung der Werkstücke zu Stapelbildern vor dem Aufstapeln auf Hubwerke besondere Förderer benötigt. Das sind zusätzliche Einrichtungen, die bei der Anschaffung und bei der Produktion Kosten verursachen. Außerdem fehlt dieser Vorrichtung die Möglichkeit einer palettenlosen Förderung der Stapel. Es müssen vor dem Aufstapeln der Stapelbilder auf die Hubwerke Paletten oder Unterlegplatten von Hand oder maschinell aufgelegt werden. Das verursacht wieder Kosten.

Der Erfindung liegt daher die Aufgabe zugrunde, eine Vorrichtung zu schaffen, die mit nur einer Einrichtung für die Zusammenstellung von Werkstücken zu Stapelbildern für das Aufstapeln auskommt und die Einrichtungen für die Stapelförderung hat, mit der die Stapel bis zu einem Palettierförderer 'getragen' und nicht gerollt werden. Das erübrigt das Auflegen der Paletten und Unterlegplatten auf die Hubwerke. Das Palettieren der Stapel erfolgt bei der Erfindung zentral für alle von den Hubwerken kommenden Stapel auf einem Palettierförderer, der in der sowieso erforderlichen Stapelverpackung eingegliedert ist.

Gelöst wurde die Aufgabe durch die im kennzeichnenden Teil der Anspruchs 1 und auch der dem Anschruch 1 folgenden Ansprüche.

In der nachfolgenden Beschreibung wird ein Ausführungsbeispiel der Erfindung dargestellt. Es zeigt:

Figur 1 Gesamtdraufsicht einer Vorrichtung,

Figur 2 Teildraufsicht einer bestimmten Nutzungsart der Vorrichtung,

Figur 3 Gesamtansicht einer Vorrichtung,

Figur 4 Teilansicht einer bestimmten Nutzungsart der Vorrichtung.

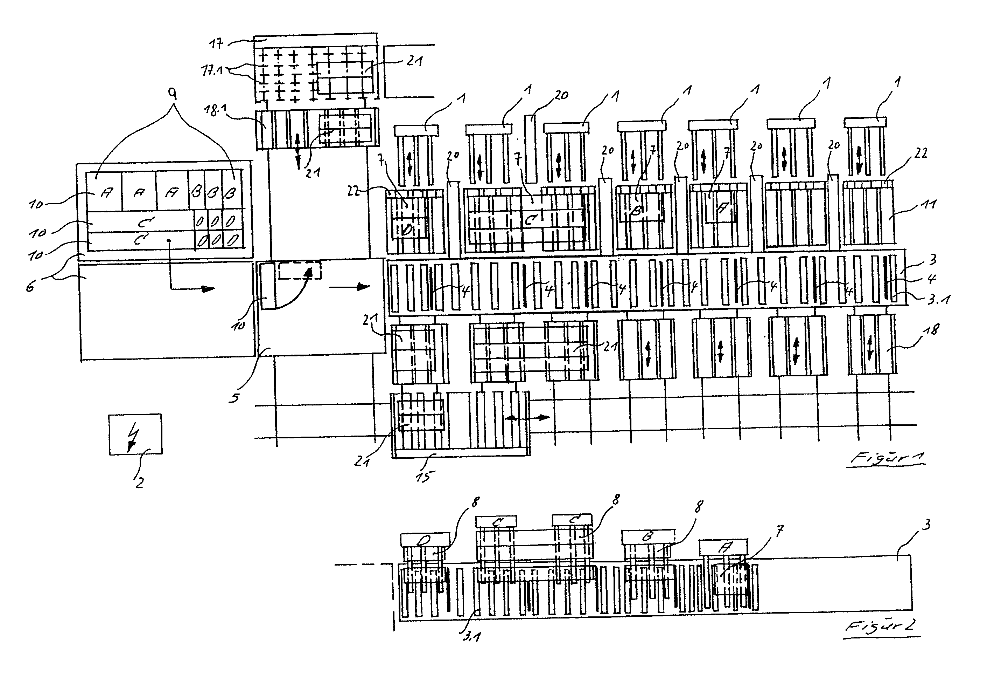

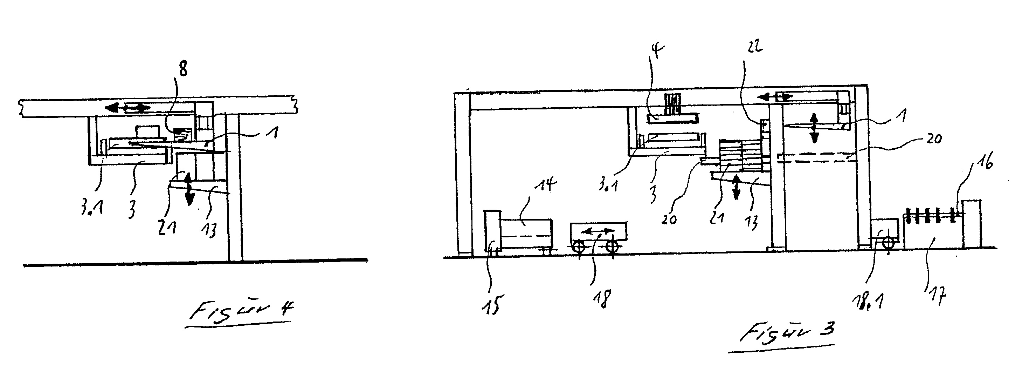

Die von einer nicht dargestellten Aufteilsäge auf den Winkelförderer 6 gebrachten Produktionschargen 9 enthalten in aller Regel mehrere unterschiedlich große Werkstücke 10 mit ebenfalls in aller Regel unterschiedlichen Stückzahlen. Die Werstücke 10 werden für ihren Versand zu Stapeln 21 in den verschiedensten Stapelbildern 7 aufgestapelt. Das geschieht meistens auf Paletten oder Unterlegplatten, das heist, daß diese vorher da sein und dann - meistens von Hand - untergelegt werden müssen vor dem Aufstapeln. Die Längsreihen der Werkstücke 10 einer Produktionscharge 9 werden einzeln oder mehrfach auf dem Winkelförderer 6 je nach Erfordernis aufgrund der jeweiligen Ausführung der Stapelbilder 7 und Teilstapelbilder 8 vereinzelt und über den Drehförderer 5 und Rollenförderer 3 zu den Aufnahmestellen der Rechen 1 gefördert. Die Rechen 1 haben bei der Zusammenstellung ihres Stapelbildes zwischen und unterhalb der Rollen 3.1 des Rollenförderers 3 ihre Grundstellung. Wenn der Rechner 2 einem Rechen 1 ein komplettes Stapelbild 7 zuweist, bringt der Rechen 1 dieses sofort durch Anheben und Verfahren zu seinem Hubwerk 11. Dort wird es während der Verfahrbewegung vorn feststehenden Anschlag 22 vom Rechen 1 abgeschoben. Das so beladene Hubwerk 11 senkt um die Höhe der Beladung ab und der Rechen 1 verfährt in seine Grundstellung zwischen die Rollen 3.1 für die Übernahme z. B. eines Teilstapelbildes 8, das aus einem oder mehreren Werkstücken 10 nebeneinander-und/oder hintereinanderliegend als Rest z.B. einer Produktionscharge 9, oder zur Vervollständigung eines Teilstapelbildes 8, vom Rechen 1 aufgenommen wird. Der Rechen 1 verfährt etwas mehr als die auf ihm liegenden Werkstücke 10 breit sind in Richtung seines Hubwerkes 11, nachdem er die Werkstücke 10 etwas von den Rollen 3.1 abgehoben hat. Wenn von der nächsten Produktionscharge ein weiteres Werkstück 10 vor das vorher vom Rechen 1 aufgenommene benötigt wird, hebt der Rechen 1 zunächst etwas an und legt das auf ihm befindliche Werkstück 10 wieder auf die Rollenförderer vor den Anschlag 4. Das neue Werkstück 10 kann nun vom Rollenförderer 3, der als Friktionsrollenförderer ausgeführt ist, vor das vorhandene Werkstück 10 gefördert werden. Befehlsgeber im Anschlag 4 beenden den Fördervorgang. Wenn so vom Rechner 2 in Verbindung mit den verschiedenen anderen Einrichtungen das Stapelbild 7 komplett zusammengestellt ist, wird der Aufstapelvorgang eingeleitet. Für längere Werkstücke 10 ordnet der Rechner 2 die Verwendung mehrerer Rechen 1 mit den dazugehörigen anderen Einrichtungen für die Bildung von Teilstapelbildern 8 bzw. Stapelbildern 7 usw. an.

Da dem Rechner 2 die Ausführung der Produktionschargen 9 immer bekannt ist, läßt er die querliegenden Werkstücke einzeln oder mehrfach je nach Bedarf vom Drehförderer 5 automatisch um 90° drehen und zu den vorbestimmten Stapelbildern 7 oder 8 fördern.

Die auf den Hubwerken 11 fertig gebildeten Stapel 21 werden von den Unterlagen 13 durch Eintauchen in den Stapelquerförderer 18, der in diesem Bereich mit hochkant stehenden Flachschienen ausgerüstet ist, diesem für den Transport zum Längsföderer 15 übergeben. Der Längsförderer 15 bringt alle fertigen Stapel 21 von allen Stapelquerförderern 18 von den Hubwerken 11 zur Übergabe an den Stapelquerförderer 18.1, der wiederum fördert den Stapel 21 auf den Palettierföderer 17. Für die Übergabe der Stapel 21 von den Stapelquerförderern 18 und 18.1 an den Längsföderer 15 bzw. an den Palettierförderer 17 tauchen die Stapelquerförderer 18 bzw. 18.1 mit ihren hochkant stehenden Flachschienen zwischen die sich im abgesenkten Zustand befindlichen Unterlagen 14 des Längsförderers 15 bzw. Unterlagen 16 des Palettierförderers 17, die aus Scheibenrollen 17.1 bestehen. Die Unterlagen 14 und 16 werden wieder angehoben und die Stapelquerförderer 18 bzw. 18.1 fahren in ihre Grundstellung zurück. Die Stapel 21 sind damit an den Längsförderer 15 bzw. Palettierförderer 17 übergeben. Die Unterlage 14 besteht ebenfalls aus hochkant stehenden Flachschienen, die an der Einfahrseite der Stapelquerförderer 18 und 18.1 für diese offen gehalten ausgeführt sind, ebenso die Unterlage 16. Anstatt der hochkant stehenden Flachschienen ist der Palettierförderer jedoch mit Scheibenrollen 17,1 für die Förderung der Stapel 21 in die nachfolgende Verpackungsanlage ausgerüstet. Zwischenden Scheiben der Scheibenrollen 17,1 befindet sich der Freiraum, in die Palettenleisten manuell oder maschinell eingebracht werden. Diese Palettenleisten werden bei der Abförderung der Stapel 21 unter diese gedrückt und mit in die nachfolgende Verpackungsanlage gefördert. Die Stärke der Palettenleisten, worauf jetzt der Stapel 21 steht, wird von einem Hubwerk der Verpackungsanlage ausgeglichen.

Für manuelles Abnehmen der Werkstücke 10 von den Rollenförderern 3 und zum Aufstapeln auf die Hubwerke 11 sind ortsveränderliche Begehbühen 20 vorgesehen, die für die Nutzung mehrerer Rechen 1 für lange Werkstücke 10 ortsveränderlich ausgeführt sind.

werke (11) alle vorhandenen Rechen (1) mit ihren Abstreifern (12) beliebig anzuwenden vorgesehen sind.

2. Vorrichtung nach Anspruch 1) dadurch gekennzeichnet, daß die Unterlagen (13) bei den Hubwerken (11) ebenso wie die Unterlagen (14) des heb- und senkbaren Längsförderers (15) aus einseitig offenen Schienenrahmen bestehen und so ausgeführt und angeordnet sind, daß die Stapel (21) bis auf den Palettierförderer (17) 'getragen' anstatt 'gerollt' werden, und daß die Unterlagen (16) des Palettierförderers (17) aus Scheibenrollen (17.1) bestehen, die ebenfalls einseitig offen sind), sodaß durch die spiegelbildlichen Ausführungen der Unterlagen (13), (14) und (17) ein Einfahren in sie mit den Stapelquerförderern (18) und (18.1) gewährleistet ist.

3. Vorrichtung nach Anspruch 1 und 2, dadurch gekennzeichnet, daß für Werkstücke (10), die in den Produktionschargen (9) eine Querlage einnehmen, nach ihrer Winkelförderung auf Winkelförderer (6) im Anschluß ein Drehförderer (5) vorgesehen ist.

4. Vorrichtung nach Anspruch 3, dadurch gekennzeichnet, daß die Anschläge (4) zwischen den Rollen (3.1) des Rollenförderers (3) bzw. an der Fahrkonstruktion (19) für die Rechen (1) oberhalb des Rollenförderers (3) anbringbar ausgeführt sind.

5. Vorrichtung nach Anspruch 4, dadurch gekennzeichnet, daß zwischen den Hubwerken (11) und den Rechen (1) jeweils ortsveränderliche Begehbühnen (20) vorgesehen sind, die für manuelles Abnehmen der Werkstücke (10) vom Rollenförderer (3) und gleichzeitigem Aufstapeln auf die Hubwerke (11) zu beliebigen Stapelbildern (7) ausgeführt sind.

**Ansprüche**

1. Fördervorrichtung für flächige Werkstücke, dadurch gekennzeichnet, daß ein fahrbarer sowie heb- und senkbarer Rechen (1) vorgesehen ist, auf dem in Verbindung mit Rechner (2), Rollenförderer (3), Anschlag (4), Drehförderer (5) und Winkelförderer (6), sowohl ganze Stapelbilder (7) aus einer, als auch Teilstapelbilder (8) aus mehreren Produktionschargen (9), ungeachtet der größen- bzw. mengenmäßigen Anteile der Werkstücke (10) bei Nutzung auch meherer Rechen (1) für ein Stapelbild (7), gebildet werden, und daß für das Aufstapeln der Stapelbilder (7) und der aus Teilstapelbildern (8) entstandenen Stapelbilder (7) auf die Hub-

Figur 1

Figur 2

Figur 4

Figur 3

EP 0 422 600 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | CH - A5 - 602 456 (SCHELLING & CO) * Gesamt * ---- | 1 | B 65 G 57/02 |

|  |  |
|---|---|
|  | RECHERCHIERTE SACHGEBIETE (Int. Cl.⁵) |
|  | B 65 G |

Der vorliegende Recherchenbericht wurde für alle Patentansprüche erstellt.

| Recherchenort WIEN | Abschlußdatum der Recherche 16-12-1990 | Prüfer PISSENBERGER |
|---|---|---|